Europäisches Patentamt

European Patent Office

Office européen des brevets

(19)

(11) Publication number: **0 140 812**
**B1**

(12) # EUROPEAN PATENT SPECIFICATION

(45) Date of publication of patent specification: **23.03.88**

(51) Int. Cl.⁴: **F 16 B 37/12**

(21) Application number: **84630137.2**

(22) Date of filing: **14.09.84**

(54) **Tangless helically coiled insert.**

(30) Priority: **16.09.83 US 533845**

(43) Date of publication of application:
**08.05.85 Bulletin 85/19**

(45) Publication of the grant of the patent:
**23.03.88 Bulletin 88/12**

(84) Designated Contracting States:
**BE CH DE FR GB IT LI NL SE**

(56) References cited:
**EP-A-0 090 698**
**AT-B- 376 285**
**CH-A- 559 320**
**US-A-2 363 789**
**US-A-3 272 250**

(73) Proprietor: **REXNORD INC.**
**350 N. Sunny Slope Road**
**Brookfield, WI 53005 (US)**

(72) Inventor: **Cosenza, Frank J.**
**1524 W. Fifth Street**
**San Pedro California 90732 (US)**
Inventor: **Yamamoto, Albert K.**
**8172 Deauville Drive**
**Huntington Beach California 92646 (US)**

(74) Representative: **Weydert, Robert et al**
**OFFICE DENNEMEYER S.à.r.l. P.O. Box 1502**
**L-1015 Luxembourg (LU)**

Courier Press, Leamington Spa, England.

# Description

This invention relates to wire coil screw thread inserts for tapped holes of workpieces and, more particularly, to an improved tangless wire coil insert.

The conventional wire coil screw thread insert is provided, at one of its ends, with a diametrical tang of its end convolution so arranged that the tang can be gripped by a special tool projected through the coil for insertion of the wire coil insert into a tapped hole. The tang must be broken off and removed after the insertion of the coil insert because the tang would prevent a bolt from being screwed through the coil. Accordingly, a notch is provided on the inside of the end convolution of the coil so that the tang of the coil insert may be broken off. It is evident from such previously known devices, that the broken tang must be accounted for in certain critical applications, e.g. in electronic equipment in which the loose metal tang could cause an electrical short and in internal combustion engines where the loose metal tang could cause engine failure. Further, the extraction of prior art inserts required the use of an extracting tool which cut into the inner threads of the insert and thus rendered the insert unusable for further service.

Further, the problem with prior art inserts, such as tangless inserts as described in US—A—2,363,789 is that they require the one end convolution having the recessed hook means therein to project inwardly to avoid the possibility of causing burrs or otherwise injuring the tapped thread during the insertion of the helically coiled insert. Again, the extraction of these tangless coil inserts require damaging the inner threads by use of an extraction tool.

The method used for inserting a prior art wire coil insert into a tapped hole required an operator to manually orientate the insert to be able to apply a torque to the lead end of the coiled insert during the insertion, since the tang or recessed hook means was only at one end of the insert.

Thus, there exists a need for a double-ended tangless wire coil screw thread insert which can be inserted into the parent material in either direction, without regard to orientation, and can be subsequently removed without damage to the insert and does not require the accountability of broken tangs.

The present invention is directed to a tangless helically coiled insert, and is summarized in the following objects:

First, to provide an insert which an operator may install without orientating the insert in one particular direction.

Second, to provide an improved insert which will permit easy insertion thereof and prevent galling of the parent material.

Third, to provide an insert having recessed hook means at both free end coils to facilitate insertion and removal of the insert without damage to the insert or the parent material.

Fourth, to provide an insert whereby no secondary operations are required to remove and account for an unnecessary tang.

The various features of novelty which characterize the invention are pointed out with particularity in the claim annexed to and forming a part of this specification. For a better understanding of the invention, its operating advantages and specific objects obtained by its use, reference should be had to the accompanying drawings and descriptive matter in which there is illustrated and described a preferred embodiment of the invention.

A more thorough understanding of the present invention will be gained by reading the following description of the preferred embodiments with reference to the accompanying drawings in which:

In the accompanying drawings, forming a part of this specification, and in which reference numerals shown in the drawings designate like or corresponding parts throughout the same,

Figure 1 is a perspective view of a tangless helical coil insert made in accordance with the present invention;

Figure 2 is a side elevation of the insert of Figure 1;

Figure 3 is a front elevation view of the insert of Figure 2;

Figure 4 is an enlarged plan view of either free end of the present invention;

Figure 5 is a front elevation of another embodiment of the present invention;

Figure 6 is an enlarged plan view of either free end of the embodiment of Figure 5.

The present invention is particularly adapted for use in instances where a steel alloyed bolt having conventional threads is desired to be fastened into a material of relatively softer alloy, such as aluminum. The tapping of the threaded hole in the parent material will not ordinarily provide a sufficiently firm fastening means. Accordingly, a helically coiled insert of material similar to the bolt is inserted in the tapped hole to provide adequate locking means in order that the bolt may be inserted and removed repeatedly without doing severe damage to the parent material.

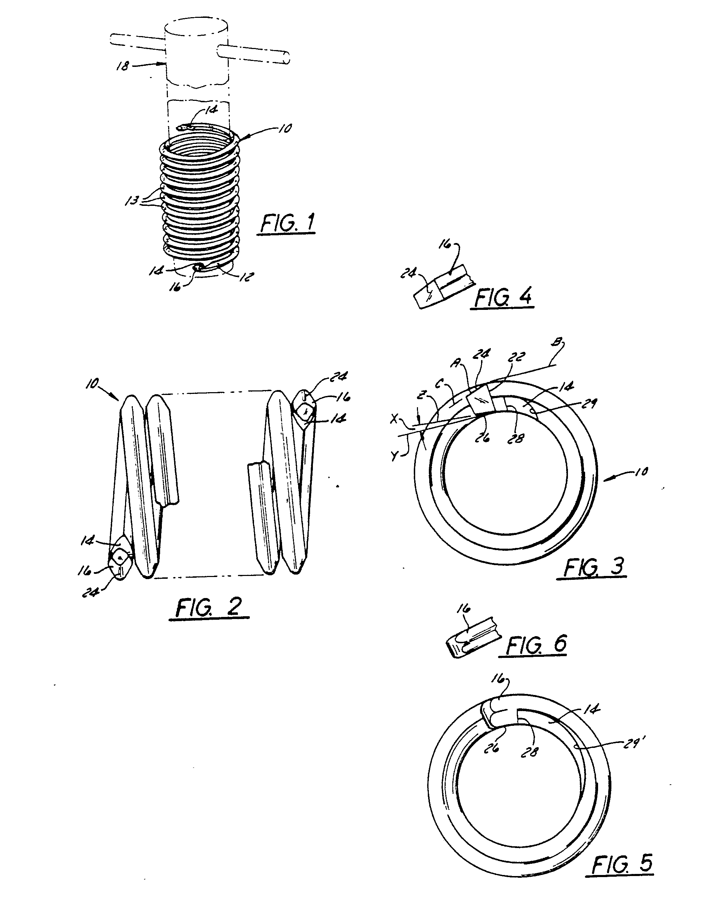

In accordance with the preferred embodiment of the invention, as shown in Figures 1—4, there is depicted a helical coil insert 10 which is wound having any degree of advance corresponding to the advance for a particular threaded member with which it is designed to cooperate. Thus, for various thread sizes and for various diameters of threaded members, the insert 10 may have slightly different dimensions. Although the preferred embodiment shows a wire coil having a generally diamond-shaped cross-section, it is to be understood that the invention is applicable to coils of wire cross-section of any form such as square, round, or triangular. What is important, however, is that both free end convolutions 12 are so formed that they constitute a recess or grip means 14 for a suitable insertion tool.

When the insert 10 is to be inserted in a tapped hole, or a boss, or nut, the tool is first inserted into the insert from either free end 12, so that a pawl or gripper portion of the tool 18 engages the recess 14 of the insert 10 which, then, may be screwed by means of the tool 18 into the tapped hole. In certain smaller sizes of inserts it has been found necessary to use a special tool having a prewinder sleeve in which the insert is first placed, without regard to orientation, so that the insert can be reduced in diameter prior to being screwed into the tapped hole. In screwing the insert 10 into the tapped hole, the torque applied by the tool to the recess 14 will generally cause a contraction of the free end convolution 12 so that during the insertion, first, the terminal end 16 will enter the tapped thread whereupon the free end convolution 12 and the remaining convolutions 13 of the insert body will follow. When the torque is relieved, the coil convolutions will expand to be firmly seated in the tapped thread. The seating of the free end convolution 12 in the tapped thread will prevent, when screwing a bolt into the insert 10, the danger of the bolt taking the insert 10 along if the friction between the bolt and the recess 14 is very high.

A terminal end 16 of the free end convolutions 12 constructed in accordance with a preferred embodiment of the invention is illustrated in Figures 2—4. A truncated portion or free end, being slightly reduced along the longitudinal axis of the wire forms the terminal end 16 at both free end convolutions 12. The truncated ends are preferably formed with an angle A between -10—15 degrees included between a line B tangent to the rear portion of the truncated end 22 and a line C formed by the outer crest 24 of the diamond-shaped wire. A lesser angle X is included between a line Y tangent to the inner circumference at the rear portion 22 of the truncated end and a line Z coextensive with the inner crest 26 of the diamond-shaped wire. The purpose of the truncated portion of the terminal end 16 of the insert is to prevent sharp edges from shaving metal during installation of the insert into a tapped hole.

Figures 5—6 show another embodiment of the terminal end 16 of the insert 10 in which the diamond-shaped wire is rounded off in the form of a truncated cone. Again, this configuration will prevent sharp edges from shaving metal from the parent material during installation of the insert into a tapped hole.

Referring again to Figure 3, there is shown a recess 14 which receives an outwardly biased pawl (not shown) from the insertion tool 18 which provides the necessary torque to screw the insert 10 into the parent material. The recess 14 has a lead wall portion 28 generally raked between 5—15 degrees. This angular rake insures that the gripper pawl of the insertion tool 18 is fully inserted into the recess 14 in order to cause a torsional force on the free end convolution 12 so that the free end convolution 12 will be contracted during the insertion of the helically wound insert 10. In the preferred embodiment, as illustrated in Figure 3, the camming surface 29 of the recess 14 is kept to a minimum to increase the bolt surface strength area for an inserted bolt, thus reducing pullout of the bolt.

The insert of the present invention results in a helically coiled insert which is readily adaptable to fully automatic operations since the insert 10 can be inserted with either free end convolution being the lead thread and insures a stronger insert with less pullout.

Finally, it will be clear that the two free end convolutions 12, each with a recess 14, will permit removal of the insert 10 from the parent material by inserting the tool 18 into the insert 10 in order that the pawl of the tool engages the recess 14 opposite the recess used to insert the coiled insert 10. Again, the torque applied to the insert 10 by the tool in the opposite direction for insertion will cause contraction of the free end convolution during removal of the insert.

## Claim

Screw thread insert (10) adapted for installation into a threaded hole in a parent material comprising a substantially cylindrical body of helically wound wire, said body having an inner screw thread and an outer screw thread forming a plurality of coils (13), said plurality of coils (13) including a first free end coil (12) and a second free end coil (12) opposite said first end coil and a recess (14) in one of said end coils (12), said recess being adapted to receive therein a portion of a tool (18) during installation of the insert into the parent material, characterized in that an identical recess (14) is provided in the other free end coil (12) and is adapted to receive therein a portion of the tool (18) during removal of the insert (10) from the parent material, and that the end coils (12) are each provided with means for preventing damage to the parent material during installation of the insert (10), said means including each of the free end coils (12) having a terminal, truncated end portion (16), each of said truncated end portions (16) being of reduced cross-section along a pre-selected length with respect to the cross-section of the remaining coiled wire.

## Patentanspruch

Schraubengewindeeinsatz (10) für den Einbau in ein Gewindeloch in einem Muttermaterial, mit einem im wesentlichen zylindrischen Körper aus schraubenförmig gewickeltem Draht, wobei der Körper ein inneres Schraubengewinde und ein äußeres Schraubengewinde hat, die mehrere Wickel (13) bilden, welche einen ersten freien Endwickel (12) und einen zweiten freien Endwickel (12) entgegengesetzt zu dem ersten Endwickel und eine Ausnehmung (14) in einem der Endwickel (12) umfassen, wobei die Ausnehmung zum Aufnehmen eines Teils eines Werkzeugs (18) während des Einbaus des Einsatzes in das Muttermaterial vorgesehen ist, dadurch gekennzeichnet,

## 0 140 812

daß eine identische Ausnehmung (14) in dem anderen freien Endwickel (12) vorgesehen und zur Aufnahme eines Teils des Werkzeugs (18) während des Entfernens des Einsatzes (10) aus dem Muttermaterial dient, und daß die Endwickel (12) jeweils mit einer Einrichtung versehen sind, die eine Beschädigung des Muttermaterials während des Einbaus des Einsatzes (10) verhindert, wobei diese Einrichtung an jedem freien Endwickel (12) einen abschließenden, kegelstumpfartigen Endteil (16) hat, wobei jeder dieser kegelstumpfartigen Endteile (16) auf einer vorgewählten Länge eine reduzierten Querschnitt in bezug auf den Querschnitt des übrigen gewickelten Drahtes hat.

**Revendication**

Pièce rapportée à filetage (10) destinée à être mise en place dans un trou taraudé ménagé dans une matériau de base, cette piéce comprenant un corps sensiblement cylindrique en fil métallique enroulé en hélice, ce corps présentant un filetage intérieur et un filetage extérieur constituant un ensemble de spires (13), cet ensemble de spires (13) comprenant une première spire extrême libre (12) et une seconde spire extrême libre (12) située à l'opposé de la première spire extrême, et une cavité (14) ménagée dans l'une desdites spires extrêmes (12), cette cavité étant destinée à ce que s'y loge une partie d'un outil (18) au cours de la mise en place de la pièce rapportée dans le matériau de base, caractérisée en ce qu'une cavité identique (14) est prévue dans l'autre spire extrême libre (12) et est destinée à ce que s'y loge une partie de l'outil (18) au cours de l'extraction de la pièce rapportée (10) hors du matériau de base, et en ce que les spires extrêmes (12) présentent chacune des moyens permettant d'éviter un endommagement du matériau de base au cours de la mise en place de la pièce rapportée (10), ces moyens étant constitués par le fait que chacune des spires extrêmes libres (12) présente une partir extrême tronquée (16), chacune des parties extrêmes tronquées (16) ayant, sur une longueur préfixée, une section transversale réduite par la rapport à la section transversale du reste du fil métallique enroulé.

0 140 812

FIG. 1

FIG. 2

FIG. 3

FIG. 4

FIG. 5

FIG. 6

1